(19) **Europäisches Patentamt / European Patent Office / Office européen des brevets**

(11) **EP 4 769 968 A1**

(12) **EUROPEAN PATENT APPLICATION**

(43) Date of publication:
**01.07.2026 Bulletin 2026/27**

(21) Application number: **24223709.7**

(22) Date of filing: **30.12.2024**

(51) International Patent Classification (IPC):
**H04B 7/06** $^{(2006.01)}$   **H04B 7/0452** $^{(2017.01)}$

(52) Cooperative Patent Classification (CPC):
**H04B 7/0617; H04B 7/0452**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Imec VZW**
  **3001 Leuven (BE)**
• **Katholieke Universiteit Leuven**
  **KU Leuven Research & Development**
  **3000 Leuven (BE)**

(72) Inventors:
• **GUENACH, Mamoun**
  **1800 Vilvoorde (BE)**
• **ERTUGRUL, Yigit**
  **3001 Leuven (BE)**
• **DESSET, Claude**
  **4802 Heusy (BE)**

(74) Representative: **AWA Sweden AB**
  **Matrosgatan 1**
  **Box 5117**
  **200 71 Malmö (SE)**

(54) **MILLIMETER-WAVE BEAMFORMING**

(57)   A method (1000) for use in millimeter-wave beamforming comprises acquiring (1004) a direction of a first beam (103) and a direction of a second beam (105); selecting (1008) an analog beamforming profile based on an angular separation between said first beam (103) and said second beam (105); and communicating (1010) through said first beam (103) and said second beam (105) according to the selected analog beamforming profile.

Fig. 1b

EP 4 769 968 A1

## Description

Technical field

The present description relates to a method for use in millimeter-wave beamforming.

Background

Millimeter wave communication systems have a potential for high throughput due to the large available bandwidth. Channels are sparse and may be dominated by line-of-sight (LOS) propagation, with limited non-line-of-sight components. Beamforming is important for achieving high-throughput, requiring the achieving of sufficient beamforming gain, which may be referred to as harvesting of sufficient beamforming gain.

Beamforming relies on accurate beam alignment typically along the strongest propagation path such as the line of sight and any beam misalignment can degrade the performance depending on the number of transmit and receive antennas that determine the beamwidth where most of the radiated power is concentrated, the antenna separation that determines the beamwidth and the grating lobes, channel changes due to, e.g., the speed of the moving devices, which may determine how fast the beam tracking should be. In multi-user applications, beam alignment may become even more important because of the multiuser interference resulting from inter-beam-interference.

As analog beamforming should be understood any beamforming performed in the analog domain, such as one or more of phase shift, gain scaling, and/or the turning on or off of individual antennas.

Beamforming may be performed purely in the analog domain, so-called pure analog beamforming, using pre-coding in the digital domain, or combinations thereof, so-called hybrid beamforming.

In the state of the art, hybrid beamforming systems using partially (PCA) and fully (FCA) connected architectures generally outperform pure analog beamforming in terms of spatial multiplexing, i.e., the number of streams that can be simultaneously multiplexed. However, such hybrid beamforming carries high complexity, for example in the architectures used and the requirement for detailed channel state information.

Thus there is a need for a scheme that may allow for handling inter-beam interference in a scheme requiring less complexity.

Summary

To this end, there is provided a method for use in millimeter-wave beamforming, comprising acquiring a direction of a first beam and a direction of a second beam; selecting an analog beamforming profile based on an angular separation between said first beam and said second beam; and communicating through said first beam and said second beam according to the selected analog beamforming profile. The selecting of an analog beamforming profile may typically be made based on a number of pre-determined analog beamforming profiles.

As communicating should be understood transmitting; receiving; or transmitting and receiving.

In conjunction with the present inventive concept, beamforming may typically be performed without combination with beamforming in the digital domain, i.e., as pure analog beamforming. However, the present inventive concept does not exclude the use of hybrid beamforming.

The selecting of an analog beamforming profile based on the angular separation between the beams allows for an optimization of analog beamforming to the conditions at hand. This may allow for increased performance of pure analog beamforming and thus for the dispensing with hybrid beamforming, leading to lower complexity and lower cost. Further, the present inventive concept may allow for higher robustness to inter-beam interference at a given complexity.

Further, in hybrid beamforming applications, the present inventive concept may improve beamforming performance by providing a better effective analog channel on which the digital beamforming is applied.

The selecting may be performed using a pre-determined mapping between said angular separation and said analog beamforming profile. Using a pre-determined mapping may allow less complexity at the time of communicating.

The selected analog beamforming profile may further comprise one or more of: line-of-sight beamforming, tapering, non-line-of sight beamforming, sparse analog beamforming, and TDMA and/or OFDMA. Such a selection of analog beamforming profiles may allow for the analog beamforming to be particularly tuned to the conditions at hand.

The pre-determined mapping may be based on a measure of inter-beam interference between said first beam and said second beam. Hereby, the analog beamforming may be tuned for the particular conditions at hand, which may increase performance.

For example, and typically, the measure of inter-beam interference may be a signal-to-interference-plus-noise ratio, SINR. As further examples, the measure of inter-beam interference may be noise measured at a receiver, or a link quality indicator, such as a number of retransmissions.

The pre-determined mapping may be based on operational data gathered during said communicating. Hereby, the beamforming may be further tuned for the actual conditions at hand.

According to a second aspect, there is provided a device configured to perform the method of the first aspect. This aspect may generally present the same or corresponding advantages as the first aspect.

According to a third aspect, there is provided a non-transitory computer-readable medium comprising instructions which, when executed by a computer or processor, causes the computer or processor to carry out the method of the first aspect.

This aspect may generally present the same or corresponding advantages as the first aspect.

According to a fourth aspect, there is provided a method for use in conjunction with millimeter-wave analog beamforming, comprising, based on a measure of inter-beam interference, determining a mapping between an angular separation between a first beam and a second beam, and an analog beamforming profile.

This aspect may generally present the same or corresponding advantages as the first aspect.

The measure of inter-beam interference may be a signal-to-interference-plus-noise ratio, SINR.

The said analog beamforming profile of said mapping may be one of: line-of-sight beamforming, tapering, non-line-of sight beamforming, sparse analog beamforming, and TDMA and/or OFDMA.

The method may further comprise acquiring a direction of a first beam and a direction of a second beam; selecting an analog beamforming profile based on an angular separation between said first beam and said second beam and the determined mapping; and transmitting said first beam and said second beam according to the selected beamforming profile.

The method may further comprise updating the determined mapping based on operational data gathered during said transmitting.

According to a fifth aspect, there is provided a device configured to perform the method of the fourth aspect. This aspect may generally present the same or corresponding advantages as the first aspect.

According to a sixth aspect, there is provided a non-transitory computer-readable medium comprising instructions which, when executed by a computer or processor, causes the computer or processor to carry out the method of the fourth aspect.

Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.

 Fig. 1a shows a block diagram of a device which may be configured to carry out the disclosed method as part of a millimeter wave network.
 Fig. 1b shows a block diagram of the device communicating with two further devices in the millimeter wave network.
 Fig. 2 shows a method example.

Detailed description

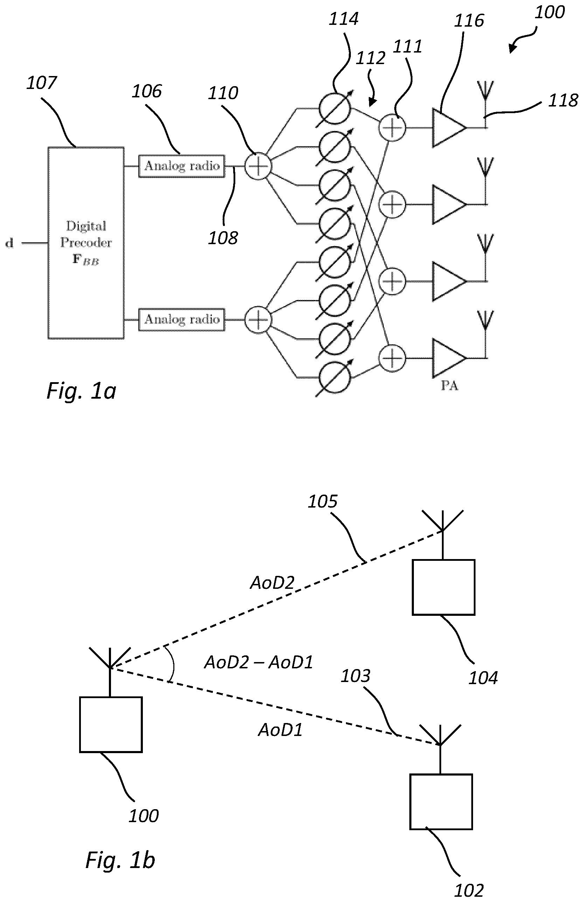

Fig. 1b shows a device 100. The device 100 may be an access point, AP and/or base station in a millimeter wave network, such as an IEEE 802.11 network or a mobile network. The device 100 may communicate with one or more, typically two or more, other devices 102, 104, which may be user equipment, UE and/or mobile stations STA, or the like, in a multi-user wireless network. Generally, the present inventive concept is applicable to any single device 100 communicating with a plurality of other devices 102, 104.

As shown, the device 102 may have an angle of departure AoD1 with respect transmission from the device 100, corresponding to a first beam 103, and the device 104 may have an angle of departure AoD2 with respect to transmission from the device 100, corresponding to a second beam 105, leading to a difference in angles of departure of $\Delta$AoD = AoD2 - AoD1. Generally, $\Delta$AoD will directly affect inter-beam interference between the first beam 103 and the second beam.

It should be understood that while the present disclosure is presented in the context of the first beam 103 directed at the device 102 and the second beam 105 directed at the device 104, the present inventive concept applies equally well in a multi-user environment communicating with more than two devices and using more than two beams.

Furthermore, it should be understood that the present disclosure applies equally well for transmitting and receiving. Therefore, throughout this disclosure, references to transmitting should be understood as also being references to receiving, whereby references to angles of departure should be understood as references to angels of arrival.

Fig. 1a is an example block diagram of the device 100. The device 100 may be input digital bits *d* for transmission. The digital bits *d* may be input to an optional digital precoder 107, which may output to an analog radio 106. Alternatively, the digital bits *d* may be input directly to the analog radio 106. The analog radio may output an analog signal 108. The analog signal 108 may be input to a splitter stage 110, wherein the splitter stage 110 may output the analog signal 108 to a plurality of antenna paths 112. As an example, Fig. 1a shows four antenna paths in the plurality of antenna paths 112, however, other numbers of antenna paths are equally possible for beamforming, as known per se in the art.

As shown, each antenna path in the plurality of antenna paths may comprise a phase shifter 114, a power amplifier (PA) 116, and an antenna 118. As part of analog beamforming, the phase shifter 114 in each antenna path of the plurality of antenna paths 112 may be set independently of the phase shifters 114 of the other antenna paths, as know per se in the field for beamforming.

Further, for analog beamforming in the context of the present disclosure, each phase shifter 114 in each antenna path of the plurality of antenna paths 112 may provide independent adjustment of gain. For example, the phase and gain may be set in the form of a settable complex array excitation coefficient associated with the phase shifter 114.

Optionally, each power amplifier 116 may be independently adjusted to enforce power constraints as required, or turned on or turned off.

As shown in Fig. 1a, the device 100 may comprise a plurality of analog radios 106, e.g., for communicating with a plurality of other devices 102, 104. For example, as shown, the device 100 may comprise two analog radios 106, each connected to four antenna paths 112. Further, as shown, the antenna paths 112 from an analog radio 106 may be connected to common power amplifiers 116 and antennas 118 at connector stages 111.

Thus, the example of Fig. 1a represents a fully connected architecture (FCA). However, the present inventive concept is equally applicable to other architectures such as partially connected architectures (PCA), as known in the art.

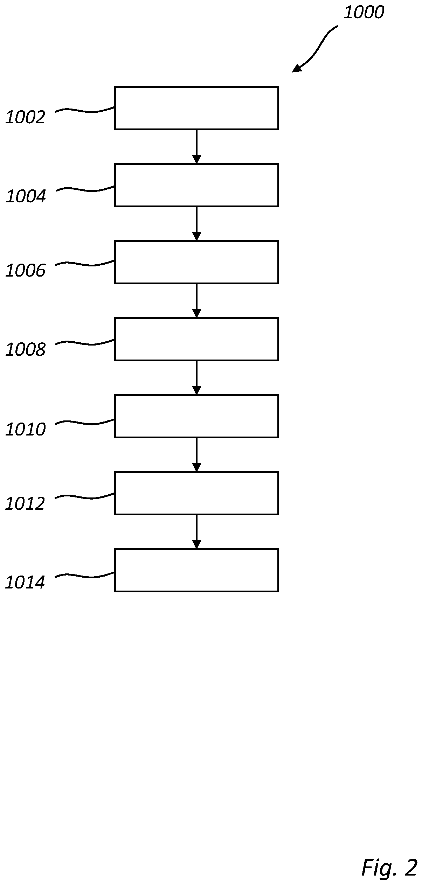

Fig. 2 illustrates a method example 1000 for use in millimeter-wave beamforming. The method example may be carried out in the device 100 configured to perform the method example 1000, in whole or in part. In particular, step 1002 may be carried out separately from the rest of the method example 1000.

Further, there may be provided a non-transitory computer-readable medium comprising instructions which, when executed by a computer or processor, causes the computer or processor to carry out the method example 1000, in whole or in part. In particular, step 1002 may be carried out separately from the rest of the method example 1000.

At 1002 a mapping between, on the one hand an angular separation ΔAoD = AoD2 - AoD1 (cf. Fig. 1b) between the first beam 103 and the second beam 105, and, on the other hand, an analog beamforming profile, is determined.

For example, the mapping may be determined at the device 100.

The mapping may be determined with respect to a specific device 102, 104, or with respect to all devices communicating with the device 100.

The mapping may involve grouping different angular separations (ΔAoD) into a number $I$ of ΔAoD intervals, $S_{\Delta}^{(i)} \ (i = 1 \dots I)$, so that each ΔAoD interval $S_{\Delta}^{(i)} \ (i = 1 \dots I)$, is mapped and/or associated with one of $P$ analog beamforming profiles $\boldsymbol{BFPp}$ ($\boldsymbol{p = 1 \dots P}$) :

$$S_{\Delta}^{(i)} \ (i = 1 \dots I) \rightarrow BFPp \ (p = 1 \dots P),$$

i.e., the mapping may be a mapping between ΔAoD

interval $S_{\Delta}^{(i)} \ (i = 1 \dots I)$ and analog beamforming profile $\boldsymbol{BFPp}$ ($\boldsymbol{p = 1 \dots P}$). The mapping may be implemented in hardware and/or software as generally known by the skilled person, for example as a look-up table (LUT).

Each analog beamforming profile $\boldsymbol{BFPp}$ ($\boldsymbol{p = 1 \dots P}$) may comprise one or more analog beamforming techniques, as known per se in the art.

In particular, each analog beamforming profile $\boldsymbol{BFPp}$ ($\boldsymbol{p = 1 \dots P}$) may comprise one or more of the following beamforming techniques, as known per se in the art: line-of-sight beamforming, tapering, non-line-of sight beamforming, sparse analog beamforming, and time division multiple access (TDMA) and/or orthogonal frequency division multiple access (OFDMA).

An analog beamforming profile, e.g., the first analog beamforming profile $\boldsymbol{BFPp}$ ($\boldsymbol{p = 1}$), of the one or more analog beamforming profiles may comprise line-of-sight beamforming, i.e., beamforming the first beam 103 and the second beam 105 directly to the respective device 102, 104, as known per se in the art. Such a beamforming profile may be selected if the risk of inter-beam interference is low, as may be the case if there is a sufficient spatial separation between the devices to which transmission is performed, which may result in a comparatively large separation of angles of departure. The gain may be set to be uniform over all antennas, and phase shifts may be set based on the actual AOD to the respective device 102, 104, as known in the art.

An analog beamforming profile, e.g., the second analog beamforming profile $\boldsymbol{BFPp}$ ($\boldsymbol{p = 2}$), of the one or more analog beamforming profiles may comprise tapering, also known as windowing, wherein the gains in each antenna path of the plurality of antenna paths 112 may be independently adjusted, as known per se in the art. In particular, tapering may be combined with phase shifting in analog beamforming. Such a beamforming profile may be selected if angles of departure are relatively separated so that there does not exist any overlap between a main lobe of the first beam and a main lobe of the second beam, so that inter-beam-interference mainly is due to side (secondary) lobes in the vicinity of the main lobe. Tapering may typically be used to shape the side (secondary) lobes in a discrete Fourier transformation, as known per se in the art. Further, again as known per se in the art, there are several well-known windows with different performance tradeoffs of frequency resolution versus the side (secondary) lobe, such as Hamming, Hanning, Blackman, and a default rectangular window.

An analog beamforming profile, e.g., the third analog beamforming profile $\boldsymbol{BFPp}$ ($\boldsymbol{p = 3}$), of the one or more analog beamforming profiles may involve non-line-of sight beamforming, where the analog beamforming, based on phase shifts in the phase shifters 114, along the first beam 103 and/or the second beam 105 is deviated from the line of sight, as to minimize inter-beam interference. In particular, the angular separation of the beams may be increased as to decrease the inter-beam interference.

An analog beamforming profile, e.g., the fourth analog beamforming profile $BFP_p$ ($p = 4$), of the one or more analog beamforming profiles may involve sparse analog beamforming. Hereby, as known per se in the art, one or more beamforming antenna paths of the plurality of antenna paths 112 may be dynamically switched on or off, e.g., through the switching off of the corresponding power amplifier 116 in the respective antenna path. Through sparse analog beamforming, the effective antenna spacing as used in the analog beamforming may be increased. Sparse analog beamforming by for instance consecutive on/off of the antennas doubles the effective antenna spacing may have an effect of sharpening the main beam, at the expense of creating grating lobes that can be deterministically known and avoided. Optimizing the sparse patterns (the on/off antenna patterns) in the sparse beamforming however can overcome the side effects (grating lobes) of the basic alternating on/off antenna pattern. Sparse analog beamforming may be specially advantageous when the transmitter is equipped with a pool of available transmit antenna paths, wherein only a fraction of these antenna paths can be activated at a time, e.g., because of hardware constraints, such as complexity and energy efficiency.

An analog beamforming profile, e.g., the fifth analog beamforming profile $BFP_p$ ($p = 5$) of the one or more analog beamforming profiles may involve TDMA and/or OFDMA, as known per se in the art. This may allow multiplexing of transmitting to a subset of devices. This may be employed in a worst case when none of the previous analog beamforming profiles can be used to sufficiently separate the first beam 103 and the second beam 105. Thus, in this example $P = 5$

Typically, a beamforming profile $BFP_p$ ($p = 1 ... P$) may comprise a single beamforming technique as per the above. However, it is equally possible for a beamforming profile $BFP_p$ ($p = 1 ...P$) to comprise a plurality of beamforming techniques.

For a given $\Delta AoD$ or $\Delta AoD$ interval, the selection of one or more analog beamforming profiles may be determined based on a measure of inter-beam interference between the first beam 103 and the second beam 105.

The measure of inter-beam interference may be selected to be as a function of the tolerated inter-beam interference (i.e., a pre-set max interference level). For example, the measure of inter-beam interference may be a signal-to-interference-plus-noise ratio, SINR, known per se in the art.

As a further example, the measure of inter-beam interference may be total noise measured at a receiver, which may correspond to a sum of thermal noise and inter-beam interference, and thus be indicative of inter-beam interference.

As yet a further example, the measure of inter-beam interference may be a link quality indicator, such as a number of retransmissions in an ARQ scheme, or the like.

For example, the one or more analog beam profiles may be selected to minimize inter-beam interference as indicated by the measure of inter-beam interference, such as maximizing the SINR. For example, a worst-case SINR may be maximized.

A given $\Delta AoD$ and a given analog beamforming profile may result in a level of inter-beam interference between the first beam 103 and the second beam 105 that may be predicted semi-analytically or can be part of reported operational data. Based thereon, an analog beamforming profile may be selected for the given $\Delta AoD$ based on a desired level of inter-beam interference, such as a maximum level of inter-beam interference tolerated.

The determining 1002 may be done beforehand, in the sense that the mapping may be pre-determined with respect to the following steps of the method example 1000. For example, the determining 1002 may be an initial determining, which may be referred to as a pre-qualification step. For example, in such an initial determining may be based on an expected or presumed channel model or behavior, such as available models of the radio topology and the radiation patterns of the different antennas in the millimeter wave network, expected system load, such as the number of active devices, stations and/or users, device architecture, antenna patterns, or communication requirements such as maximum tolerated interference levels. Such determining 1002 may be performed semi-analytically.

For determining the mapping between $\Delta AoD$ and the corresponding analog beamforming profile, the device 102 and the device 104 may be provided with assumed locations in relation to the device 100 corresponding to specific angular separations $\Delta$. Hereby, an iterative procedure may be employed wherein the device 102 and the device 104 are provided with assumed locations in relation to the device 100 corresponding to specific angular separations $\Delta$ corresponding to $\Delta AoD$ values for which the mapping is to be determined. In other words, the devices 102, 104 may be placed each time in different locations and the angular separation $\Delta AoD$ may be recorded as well as the corresponding selected analog beamforming profiles.

If the mapping is a mapping between $\Delta AoD$ interval and analog beamforming profile, after the iterative procedure as described in the last paragraph, groups of adjacent $\Delta AoD$ values for which a same analog beamforming profile has been selected may be identified, and a corresponding $\Delta AoD$ interval in the mapping may be defined to cover those $\Delta AoD$ values. If no such group can be determined for a specific $\Delta AoD$ value, a suitable interval around that $\Delta AoD$ value may be determined for the mapping. For example, each of the endpoints of that interval may be determined to be at a halfpoint to the next adjacent $\Delta AoD$ value.

Alternatively, again if the mapping is a mapping between $\Delta AoD$ interval and analog beamforming profile, the $\Delta AoD$ intervals of the mapping may be selected to have any desired granularity. For example, the granularity may correspond to ΔAoD intervals having an equal spacing. Alternatively, for example, the ΔAoD intervals of the mapping may be constructed to have a fine granularity for small values of ΔAoD and a courser granulartiy for large values of ΔAoD. For determining the mapping for a specific ΔAoD interval, the device 102 and the device 104 may be provided with assumed locations corresponding to a specific angular separation Δ falling within that specific ΔAoD interval. Hereby, for determining the mapping between each ΔAoD interval and the corresponding analog beamforming profile, an iterative procedure may be employed wherein the device 102 and the device 104 are provided with assumed locations in relation to the device 100 corresponding to specific angular separations Δ falling within each ΔAoD interval of the mapping. For example, the angular separation Δ may be selected to be at the center of the ΔAoD interval. In another example, the angular separation Δ may be selected to be at and endpoint of the ΔAoD interval. For an angular separation Δ between the device 102 and the device 104, as seen from the device 100, based on available models as disclosed above, and a given beamforming profile $BFPp$ ($p = 1 ...P$) comprising one or more beamforming techniques, a line-of-sight (LOS) signal strength may be calculated for each of transmission from the device 100 to the device 102 and transmission from the device 100 to the device 104.

Further, a measure of inter-beam interference, such as a SINR, may be calculated for inter-beam interference for transmission to the device 102 with respect to the device 104, the inter-beam interference being a function of the one or more beamforming techniques being employed according to the beamforming profile as well as the angular separation Δ. Typically, in the main lobe of the antennas radiation pattern, the inter-beam-interference improves (decreases) as the angular separation increases.

A maximum level of tolerated inter-beam interference may be defined, e.g., based on a desired performance of the millimeter wave network, such as a desired data throughput.

As a starting point, a first beamforming profile $BFPp$ ($p = 1$) may be selected and the measure of inter-beam interference between the first beam 103 and the second beam 105 may be calculated based on the available models.

If the calculated measure of inter-beam interference is less than the defined maximum level of inter-beam interference, the first beamforming profile $BFPp$ ($p = 1$) may be selected as part of the mapping for the ΔAoD Δ for the device 102 and/or the device 104..

Otherwise, the second beamforming profile $BFPp$ ($p = 2$) may be selected and the measure of inter-beam interference may be re-calculated based on the available models. If the calculated inter-beam interference is less than the defined maximum level of inter-beam interference, the second beamforming profile $BFPp$ ($p = 2$) may be selected in the mapping for the ΔAoD Δ for the device 102 and/or the device 104, and so on.

Thus, the above process may be repeated until a beamforming profile has been selected for the mapping fulfilling the desired maximum level of inter-beam interference.

The above process may be generalized for the case of more than two devices communicating with the device 100. In particular, the measure of inter-beam interference may be calculated for each combination of two devices communicating with the device 100 and the measure of inter-beam interference used for determining the mapping for a specific device communicating with the device 100 may be the inter-beam interference from the other device with the strongest inter-beam interference with respect to the device for which the mapping is determined. Further, the ΔAoD used in that mapping may be the ΔAoD between the device for which the mapping is determined and that other device.

An iterative procedure may be employed, wherein analog beamforming profiles may be assigned to each device and mappings determined for each device until levels of inter-beam interference for each device communicating with the device 100 are below a desired maximum level of inter-beam interference.

Thus, depending on the number of presumed devices 102, 104, different mappings between angular separation and beamforming profiles may be derived. Depending on the location of the scheduled users and their number, the angular separation between some of the users may be decreasing and/or increasing and hence the mapping will be different for the different setting.

As a further example, instead of defining a single maximum level of tolerated inter-beam interference as per the above, for each beamforming profile, a desired decision threshold $\varepsilon_{P-1}$ may be defined, representing a maximum level of inter-beam interference tolerated for the beamforming profile in question.

In particular, a vector $\varepsilon = [\varepsilon_1 \ ... \ \varepsilon_{P-1}]$ may be defined describing the desired decision threshold for the different beamforming profiles where P is the total number of analog beamforming profiles. As an example, profile 1 may be selected if the interference level $\hat{\beta}_k$ is less than the threshold for the first profile $\varepsilon_1$ i.e., $\hat{\beta}_k \leq \varepsilon_1$. Profile 2 may be selected if the interference level falls into the second interval i.e., $\varepsilon_1 < \hat{\beta}_k \leq \varepsilon_2$. Similarly, profile $P - r$ may be selected if the interference level falls into the $\varepsilon_{P-r-1} < \hat{\beta}_k \leq \varepsilon_{P-r}$. Finally, profile P may be selected if the interference level falls into the $\hat{\beta}_k > \varepsilon_{P-1}$.

Further, the mapping from the pre-qualification step can be improved during a calibration step prior to the actual communication where the mapping is improved based on the (actual) measured channels, i.e. some refinement can be foreseen during the normal operations to adjust/redefine the angle of departure intervals, the beamforming profiles, and/or the corresponding mappings.

In this case, the determining 1002 may further comprise actively sending from the device 100 probing signals to one or more devices 102, 104 at different positions, such as geographical location, and for each such instance record the position of the device and the corresponding measure of inter-beam interference, such as SINR.

The AoD of each device 102, 104 with which the device 100 is communicating may be known or may be detected using a beam scanning procedure, as known per se in the art, e.g. based on determining the AoD towards each device 102, 104 based on finding a maximum signal strength. Alternatively, or additionally, the full position of each device 102, 104 may be determined using techniques known per se in the art.

By sending the probing signals, actual channels can be measured and actual measures of inter-beam interference can be determined. In other words, the actual maximum interference level between the respective devices 102, 104 communicating with the device 100 may be determined.

Further, it may be determined whether the actual measure of inter-beam interference exceeds the maximum level of tolerated inter-beam interference. If so, the mapping may be updated and/or refined, e.g., a higher conservative profile is selected, starting from profile 1 and up to profile P-1

The calibration may be systematically repeated upon changes of the channel or upon devices accessing or leaving the system, and/or changing location (mobile users).

At 1004, the first beam 103 and the second beam 105 may be acquired, as known per se in the art. This may involve determining the angle of departure AoD1 to the device 102 and the angle of departure AoD2 to the device 104.

At 1006, if the mapping between ΔAoD and analog beamforming profile is a mapping between ΔAoD interval and analog beamforming, the angular separation ΔAoD = AoD2 - AoD1 between the second beam 105 and the first beam 103 may be mapped into a corresponding

ΔAoD interval $S_{\Delta}^{(i)}\ (i = 1 \ldots I)$.

At 1008, the analog beamforming profile may be selected based on the pre-determined mapping between ΔAoD and the analog beamforming profile **BFPp (p = 1 ... P)**.

Thus, the analog beamforming profile **BFPp (p = 1 ... P)** is selected based on the angular separation AoD2 - AoD1 between the first beam 103 and the second beam 105, the selecting being performed using the pre-determined mapping between the angular separation and the analog beamforming profile.

As described above, the selected analog beamforming profile may comprise one or more of: line-of-sight beamforming, tapering, non-line-of sight beamforming, sparse analog beamforming, and TDMA and/or OFDMA.

At 1010, the device 100 may communicate with the device 102 and the device 104 through, respectively, the first beam 103 and the second beam 105 using the selected analog beamforming profile.

At 1012, the device 100 may gather operational data from the communicating with the device 102 and the device 104. For example, such operational data may correspond to the measure of inter-beam interference and/or SINR data as described elsewhere in this disclosure.

At 1014, the device 100 may update the pre-determined mapping based between the angular separation and the one or more analog beamforming profiled based on the gathered operational data, wherein further communicating may be based on the updated mapping.

In the above the inventive concept has mainly been described with reference to a limited number of examples. However, as is readily appreciated by a person skilled in the art, other examples than the ones disclosed above are equally possible within the scope of the inventive concept, as defined by the appended claims.

**Claims**

1. A method (1000) for use in millimeter-wave beamforming, comprising:

   acquiring (1004) a direction of a first beam (103) and a direction of a second beam (105);
   selecting (1008) an analog beamforming profile based on an angular separation between said first beam (103) and said second beam (105);
   communicating (1010) through said first beam (103) and said second beam (105) according to the selected analog beamforming profile.

2. The method of claim 1, wherein said selecting (1008) is performed using a pre-determined mapping between said angular separation and said analog beamforming profile.

3. The method of any one of claims 1-2, wherein the selected analog beamforming profile comprises one or more of: line-of-sight beamforming, tapering, non-line-of sight beamforming, sparse analog beamforming, and TDMA and/or OFDMA.

4. The method of any one of claims 1-2, further comprising:
   determining (1002) said pre-determined mapping based on a measure of inter-beam interference between said first beam and said second beam.

5. The method of claim 4, wherein said measure of inter-beam interference is a signal-to-interference-plus-noise ratio, SINR.

6. The method of any one of claims 1-5, updating said pre-determined mapping based on operational data gathered (1012) during said communicating (1010).

7. A device (100) configured to perform the method of any one of claims 1-6.

8. A non-transitory computer-readable medium comprising instructions which, when executed by a computer or processor, causes the computer or processor to carry out the method of any one of claims 1-6.

9. A method (1000) for use in conjunction with millimeter-wave analog beamforming, comprising:
based on a measure of inter-beam interference, determining (1002) a mapping between an angular separation between a first beam (103) and a second beam (105), and an analog beamforming profile.

10. The method of claim 9, wherein said measure of inter-beam interference is a signal-to-interference-plus-noise ratio, SINR.

11. The method of any one of claims 9-10, wherein said analog beamforming profile of said mapping is one of: line-of-sight beamforming, tapering, non-line-of-sight beamforming, sparse analog beamforming, and TDMA and/or OFDMA.

12. The method of any one of claims 9-11, further comprising:

acquiring (1004) a direction of a first beam and a direction of a second beam;
selecting (1008) an analog beamforming profile based on an angular separation between said first beam and said second beam and the determined mapping; and
communicating (1010) through said first beam (103) and said second (105) beam according to the selected beamforming profile.

13. The method of any one of claims 1-10, further comprising:
updating the determined mapping based on operational data gathered during said transmitting.

14. A device configured to perform the method of any one of claims 9-13.

15. A non-transitory computer-readable medium comprising instructions which, when executed by a computer or processor, causes the computer or processor to carry out the method of any one of claims 9-13.

*Fig. 1a*

*Fig. 1b*

1000

1002

1004

1006

1008

1010

1012

1014

Fig. 2

**EUROPEAN SEARCH REPORT**

Application Number

EP 24 22 3709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/348255 A1 (LORCA HERNANDO JAVIER [ES]) 27 November 2014 (2014-11-27) * paragraph [0085] - paragraph [0098] * * claim 1 * * figures 3, 4, 11 * ----- | 1-15 | INV. H04B7/06 H04B7/0452 |
| X | US 2023/144741 A1 (CHOPRA ADITYA [US] ET AL) 11 May 2023 (2023-05-11) | 1,7,8 | |
| A | * paragraph [0061] - paragraph [0067] * * figures 2E, 2F * ----- | 2-6,9-15 | |

TECHNICAL FIELDS
SEARCHED      (IPC)

H04B

The present search report has been drawn up for all claims

| Place of search | Date of completion of the search | Examiner |
|---|---|---|
| Munich | 15 May 2025 | Toumpakaris, D |

EPO FORM 1503 03.82 (P04C01)

## ANNEX TO THE EUROPEAN SEARCH REPORT
## ON EUROPEAN PATENT APPLICATION NO.

EP 24 22 3709

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2025

| Patent document cited in search report | Publication date | Patent family member(s) | Publication date |
|---|---|---|---|
| US 2014348255  A1 | 27-11-2014 | EP      2806576 A1<br>ES      2748046 T3<br>US  2014348255 A1 | 26-11-2014<br>12-03-2020<br>27-11-2014 |
| US 2023144741  A1 | 11-05-2023 | US  2022286169 A1<br>US  2023144741 A1 | 08-09-2022<br>11-05-2023 |

EPO FORM P0459

For more details about this annex : see Official Journal of the European Patent Office, No. 12/82